(19) Europäisches Patentamt
European Patent Office
Office européen des brevets

(11) EP 1 349 811 B1

(12) # EUROPÄISCHE PATENTSCHRIFT

(45) Veröffentlichungstag und Bekanntmachung des Hinweises auf die Patenterteilung:
**15.08.2007 Patentblatt 2007/33**

(21) Anmeldenummer: **01921184.6**

(22) Anmeldetag: **14.03.2001**

(51) Int Cl.:
***C02F 1/74*** *(2006.01)* ***C02F 1/46*** *(2006.01)*

(86) Internationale Anmeldenummer:
**PCT/DE2001/000950**

(87) Internationale Veröffentlichungsnummer:
**WO 2001/072637 (04.10.2001 Gazette 2001/40)**

(54) **VERFAHREN ZUR AUFBEREITUNG VON MECHANISCH, ORGANISCH UND/ODER BIOLOGISCH VERUNREINIGTEM WASSER**

METHOD FOR THE TREATMENT OF MECHANICALLY ORGANICALLY AND/OR BIOLOGICALLY CONTAMINATED WATER

PROCEDE DE TRAITEMENT D'EAUX POLLUEES PAR VOIE MECANIQUE, ORGANIQUE ET/OU BIOLOGIQUE

(84) Benannte Vertragsstaaten:
**AT BE CH CY DE DK ES FI FR GB GR IE IT LI LU MC NL PT SE TR**

(30) Priorität: **24.03.2000 DE 10014833**

(43) Veröffentlichungstag der Anmeldung:
**08.10.2003 Patentblatt 2003/41**

(73) Patentinhaber: **Luwatec GmbH Luft-und Wassertechnik**
**06667 Weissenfels (DE)**

(72) Erfinder: **FISCHER, Friedrich**
**06217 Merseburg (DE)**

(74) Vertreter: **Wablat, Wolfgang et al**
**Wablat . Lange . Karthaus**
**Anwaltssozietät**
**Potsdamer Chaussee 48**
**14129 Berlin (DE)**

(56) Entgegenhaltungen:
**US-A- 4 246 105** **US-A- 5 527 459**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 349 811 B1

## Beschreibung

Die Erfindung betrifft ein Verfahren und eine Vorrichtung zur Aufbereitung von mechanisch, organisch und/oder biologisch verunreinigtem Wasser (Rohwasser) durch intensive Behandlung des Wassers mit Luft als Oxidationsmittel.

Die Aufbereitung von mechanisch, organisch und/oder biologisch verunreinigtem Wasser ist ein wichtiges Problem des Umweltschutzes und der Wassergewinnung. Deshalb gibt es eine Vielzahl von Wasseraufbereitungsmethoden.

Viele Wasseraufbereitungsverfahren beruhen auf der Zugabe von Chlor und Chlorgas. Wasserstoffperoxid oder anderen Oxidationsmitteln. Bekannt sind auch Elektroverfahren nach Zugabe von Natriumchlorid.

Alle bisherigen Verfahren haben jedoch den Nachteil der Zugabe von chemisch wirkenden Zusätzen oder des Verbrauchs beträchtlicher Mengen von Elektroenergie. Gerade die Zugabe von speziellen Chemikalien kann nachteilige Wirkungen mit einschließen.

Die US-A-5 527 459 offenbart ein Verfahren zur Aufbereitung von biologisch verunreinigtem Wasser durch Behandlung des Wassers mit Luft. Die Luft wird durch Ionisation von Sauerstoffmolekülen bei einer Spannung von 3 - 5 kV mit positiven und negativen Sauerstoffionen aufgeladen und durch einen Glasdiffuser in feinen Blasen in das Wasser verteilt. Ein Luftkompressor sorgt für den Druck. Die ionisierte Luft soll zum Zeitpunkt der Wasserbehandlung kein Ozon enthalten, dafür sorgt ein Ozonzersetzungskatalysator.

Die Aufgabe der Erfindung bestand deshalb darin, ein Wasseraufbereitungsverfahren unter Verwendung von Sauerstoffionen und eine entsprechende Vorrichtung so auszubilden, dass eine Ozonbildung weitgehend vermieden und ein hoher Ionisierungsgrad der Luft erzielt wird.

Erfindungsgemäß wird die Aufgabe mit einer Vorrichtung gemäß den Merkmalen des Anspruchs 1 und einem Verfahren gemäß den Merkmalen des Anspruchs 4 gelöst. Vorteilhafte Weiterbildungen der Erfindung ergeben sich aus den abhängigen Ansprüchen.

Die Aufbereitung von mechanisch, organisch und/oder biologisch verunreinigtem Wasser (Rohwasser) durch intensive Behandlung des Wassers mit Luft als Oxidationsmittel erfolgt mit anderen Worten dadurch, dass

- das Rohwasser über Filter in einen Reaktor geleitet,
- die in einem Ionisator durch elektrostatische Aufladung von Luft mit positiven und negativen Sauerstoffionen aktivierte Luft
- unter einem Druck von 1,2 bis 3,5 bar über Fritten mehrere Minuten durch den mit dem Rohwasser gefüllten Reaktor geleitet und
- das Rohwasser in an sich bekannter Weise über Filter in einen Reaktor geleitet,
- die in einem Ionisator mit einer Nennspannung von 3 bis 6 Kilo-Volt (kV) durch elektrostatische Aufladung von Luft mit positiven und negativen Sauerstoffionen aktivierte Luft,
- wobei durch gezielte Polung in einem Differenziator die Ladungsrichtung in positive oder negative Ionen gesteuert wird,
- unter einem Druck von 1,2 bis 3,5 bar über Fritten mehrere Minuten durch den mit dem Rohwasser gefüllten Reaktor geleitet und
- das so behandelte Wasser abschließend in an sich bekannter Weise durch Nachfilter gereinigt wird.

Durch die Entladung der in der Luft vorhandenen Sauerstoffmoleküle erzeugt man positiv und negativ geladene Luftionen. Die geladenen Luftionen haben die Eigenschaft, ihre Ladung schnell mit einem oxidierbaren Partner (anorganische oder organische Substanzen) im Wasser zu neutralisieren.

Der Arbeitsbereich des Verfahrens ist dabei auf einen Ionenbereich des oxidierten Potentials auf ionisierten Sauerstoff beschränkt:

| Aktiv geladene Sauerstoffmoleküle | | |
|---|---|---|
| $O_2$ | $O_2^+$ $O_2^-$ | $O_3$ |
| Inaktiver Sauerstoff | Arbeitsbereich | Ozon |

Der Übergang von aktiven Luftionen zu Ozon erfolgt bei Einfluß von hohen Energiemengen sehr schnell. Da die Abbaueffekte und damit die Reinigungswirkung durch Ozon wesentlich geringer sind als durch ionisierte Sauerstoffmoleküle, kommt es beim Verfahren darauf an, genau den schmalen Bereich der ionisierten Sauerstoffmoleküle durch die Bedingungen der Ionisation zu erreichen. Dies werden durch ein optimal konzipiertes Regelungssystem für den Ionisator und ein sensibilisierter Arbeitsbereich der Spannungsversorgung 3 - 6 kV gewährleistet.

Jede auch noch so geringe Menge an erzeugtem Ozon bedeutet den Verlust an aktiv erzeugten Sauerstoffionen. Der primär zur Verfügung stehende Sauerstoffanteil in der Luft muß bestmöglich für die Erzeugung von Luftionen genutzt werden.

Vor dem Einsatz des Verfahrens zur Aufbereitung des Rohwassers sollte eine umfassende Rohwasseranalyse erfolgen. Entsprechend dem hierdurch gewonnenen Ergebnis werden die speziellen Verfahrensbedingungen festgelegt. Das führt auch dazu. daß je nach Anwendungsfall vor dem eigentlichen Verfahren das Rohwasser durch verschiedenen Filter läuft, nämlich Rohwassergrobfilter, Kiesbettfilter und/oder Aktivkohlefilter.

Bei sehr stark verunreinigtem Rohwasser werden durch einen Patronenfilter grobe, flockige und schwebende Verunreinigungen des Wassers herausgefiltert. Nachfolgend entfernt ein Kies- und Sandbettfilter feine Verunreinigungen des Rohwassers. Dieser sollte über eine spezielle Rückspülautomatik verfügen, die individuell nach Verschmutzungsgrad des Rohwassers den Kies-Sandbettfilter zeitabhängig zurückspült. Eine abschließende Aktivkohlefilterstufe entzieht bereits erste chemische Verunreinigungen.

Die Erzeugung von positiven und negativen Luftionen, je nach Erfordernis der chemisch oder biologisch abzubauenden Substanz, wird durch eine Gleichspannung von 3 bis 6 Kilo Volt (kV) erreicht. Die Verweildauer der Luft im Ionisationsmodul beträgt dann etwa 0.5 bis 6 s, vorzugsweise 1 bis 3 s.

Eine bevorzugte Spannungsvariante besteht darin, mit einer 12 V-Niederspannungsversorgung zu arbeiten. Dabei kann die erforderliche Energiemenge aus Sonnen- und Tageslicht erzeugt werden. Aus der 12 V-Niederspannung wird über 220 V dann über eine elektronische Regelung die Betriebsspannung von 3 bis 6 kV erzeugt (Fig. 4).

Auf diese Art wird ein Ionisationsgrad der Sauerstoffmoleküle von etwa 90.bis 96 Vol. % erreicht.

Die Reaktoren zur Umsetzung der ionisierten Luft mit dem Rohwasser sind in einem Reaktorblock zusammengefaßt. Sie sind so gestaltet, daß die Luft mit den geladenen Ionen durch Kompressoren von unten in das Rohwasser geleitet werden. Diese dispergieren mit dem Rohwasser und lassen hierdurch die natürliche Oxidation stattfinden.

Um eine intensive Einwirkung der mit Sauerstoffionen aktivierten Luft auf das Rohwasser zu erreichen, erfolgt der Eintritt in den Reaktor breitflächig durch Glasfritten bei einem Druck von 2,0 bis 2,5 bar. Bewährt hat sich hierbei ein Duran-Glas-Perlator.

Je nach Anwendungsfall sollte das Verhältnis von Porenöffnungen der Glasfritten zum angewandten Druck so gewählt werden, daß die entstehenden Luftbläschen einen Durchmesser von 0,1 bis 2,0 mm, vorzugsweise von 0,1 bis 0,9 mm, haben.

Die Vorrichtung (Anlageschema gemäß Fig. 1) zur Aufbereitung von mechanisch, organisch oder biologisch verunreinigtem Wasser (Rohwasser) besteht aus

- Kombination verschiedener Filteranordnungen (2, 4 und 5),
- Füllpumpen (3),
- Ionisator (7) mit großflächigen Kathoden und Anoden und Ein- und Ausgängen für Luft zur teilweisen Ionisation von Luft, wobei der Ionisator aus

    a) einem luftdurchströmten Ionisationselement (Fig. 2) mit je einem großflächigen Anodengeflecht (3) und Kathodengeflecht (4) in einem Gehäuse (2) mit Spannungszuführungen (1) und Luftein- und -ausleitungen und
    b) einem Differenziator (Fig. 5), bei dem in einem Gehäuserahmen (1) mit Spannungszuführungen (5) ein Kathodengeflecht (2) unter zwei Glasplatten (4) eingeschlossen ist und sich auf beiden Seiten der Glasplatte ein Anodengeflecht befindet, besteht,

- Reaktoren (8) mit Ein- und Ausläufen für Wasser und die ionisierte Luft, wobei die Luft unter Druck breitflächig über Glasfritten (9) eingeführt wird,
- einem Nachfilter (11) und einem Fertigwassertank (12),

und die einzelnen Module durch Rohrleitungen verbunden und die Stoffströme über Ventile (V 1 bis V 5) und Sensoren (S 1 und 2) gesteuert werden.

Durch die Anordnung von mehreren hintereinander liegenden Ionisationselementen, bestehend aus einem Edelstahlgitter und einer Edelstahlfolie, wird eine große Oberfläche zur gezielten Ladung von Luftionen erzeugt. Somit werden durch eine langsame Strömung der Luft die vorhandenen Sauerstoffmoleküle bestmöglich geladen. Bedeutend ist dabei eine mehr als 5fache Reaktionsfläche gegenüber der normalen Oberfläche in den Außenabmaßen.

Dadurch beträgt die Ionisationsleistung des neuen Ionisators mit dem Differenziator (Fig. 5) bei einer Maschenweite von etwa 0,8 mm, Maschendurchmesser 0,63 mm, gegenüber den bisher bekannten Ionisatoren, die lediglich die Außenoberfläche eines Glasrohres oder die freie Querschnittsfläche zur Ionisation besitzen, die mehr als 5-fache Leistung gegenüber herkömmlichen Verfahren. Der Differenziator erzeugt je nach Erfordernissen der Wasserqualität das Gleichgewicht zwischen positiven und negativen Luftionen.

Die einzelnen Reaktoren (s. Fig. 3) bestehen

- aus einem äußeren Reaktormantel 2
- einem Reaktor-Innenrohr 5 mit Durchflußbohrungen 6 und einer Glasfritte 7 am unteren Ende,
- unterem Stutzen 8 zur Luftzufuhr und oberen Stutzen 1 zur Luftableitung,
- seitlich angeordnetem Wassereinlaß 10 und Wasserauslaßstutzen 3 und
- Verschraubungen 4 und Dichtungen 9.

Als Glasfritte wird zweckmäßig ein Duran-Glas-Perlator eingesetzt.

Verfahren und Vorrichtung ergeben sich aus dem beispielhaft in Figur 1 dargestellten Anlagenschema. Darin bedeuten:

1. Rohwasser-Saugkorb
2. Rohwassergrobfilter
3. Reaktoren-Füllpumpen
4. Kiesbettfilter mit Rückspülautomatik
5. Aktivkohlefilter
6. Verdichterblock
7. Ionisator
8. Reaktorsäulen
9. Fritten, Duran-Glas-Perlator
10. Zirkulationspumpe
11. Aktivkohleendfilter
12. Fertigwassertank

V.1 Zulaufventil vor Grobfilter
V.2 Reaktoren-Füllventil
V.3 Reaktorzuluftventil
V.4 Reaktorenablaufventil
V.5 Überdruck-Entspannungsventil

S.1 Reaktor-Füllstandssensor
S.2 Speicherstandssensor

Anhand dieses Schemas kann das Verfahren wie folgt beispielhaft beschrieben werden.

Das Rohwasser, welches mit mechanischen, bakteriologischen und organischen Stoffen verunreinigt ist, wird über Saugkorb (1) und Zulaufventil (V.1) in den Grobfilter (2) durch die Befüllungspumpen (3) geleitet. Dabei hat der Grobfilter eine Durchlässigkeit von 0.1 mm. Hat das Rohwasser die Befüllungspumpen (3) passiert, wird dieses durch ein Kiesbettfilter mit Rückspülautomatik (4), Filtergrad 80 Mm, und anschließenden Aktivkohlefilter (5) in die Reaktorenkolonne (8) über das Reaktorenfüllventil (V.2) geführt. Im Aktivkohlefilter werden erste chemische Verunreinigungen des Wassers absorbiert.

Nach erfolgter Befüllung der Reaktorenkolonne (8) werden die Befüllungspumpen (3) durch den Füllstandssensor (S.1) abgeschaltet. Das Reaktorenfüllventil (V.2) wird geschlossen. Der Verdichterblock (6) baut im Ionisator (7) mit Ionisationselement und Differenziator einen Druck von ca. 2,5 bar auf. Der Differenziator beeinflußt dabei die zielgerichtete Ladung von Sauerstoffmolekülen und ergänzt die Erzeugung von positiven und negativen Luftionen je nach Qualität des Wassers. Der PH-Wert wird ebenfalls konstant zum Ausgangswert gehalten.

Nachdem der genannte Druck anliegt, öffnet das Reaktorzuluftventil (V.3) und leitet den Luftstrom mit ionisierten Sauerstoffmolekülen über die Fritte (9) (Duran-Glas-Perlator) in die Reaktorenkolonne (8). Dabei wird durch den zugeleiteten ionisierten Luftstrom ein Druck von ca. 2,2 bar erzeugt.

Durch die Duran-Glasfritte (9) und durch den stetig ansteigenden Druck in den Reaktorkolonnen (8), wird ein äußerst feines Verteilungsbild erreicht. Somit dispergieren die vorhandenen Luftionen gut im Rohwasser und lösen eine natürliche Oxidation aus. Durch die Gegenstromkonstruktion der Reaktorkolonne (8) wird auch im kontinuierlichen Betrieb der Anlage eine sehr lange Verweildauer mit höchst möglicher Reaktionsintensität erreicht. Um einen konstanten Anlagendruck zu gewährleisten, wird über das Entspannungsventil (V.5) ab einem Druckanstieg über 2,2 bar der Überdruck entspannt. Die entweichende Reaktionsluft kann problemlos an die Umgebung abgegeben werden. Zur Unterstützung der gleichmäßigen Reaktion in allen Reaktorkolonnen (8) wird eine Zirkulationspumpe (10) zugeschaltet.

Nach erfolgter Reaktionszeit wird das Reaktorentleerungsventil (V.4) geöffnet. Gleichzeitig wird das Entspannungsventil (V.5) geschlossen. Die Zirkulationspumpe (10) schaltet nach Beendigung der eingestellten Reaktionszeit ab. Durch den bereits anliegenden Druck und die weitere Einleitung des Luftionenstromes, wird die Reaktorenkolonne schnell entleert. Das behandelte Wasser wird durch die Aktivkohleendfilter-Patrone (11) geleitet. Anschließend wird das Fertigwasser in den Speichertank (12) geführt. Im Speichertank (12) befindet sich der Grenzwertsensor (S. 2). der bei Maximalbefüllung des Speichertanks die gesamte Anlage abschaltet.
Wird eine beliebige Menge an Wasser entnommen, schaltet die Anlage bis zur Maximalbefüllung der Anlage wieder zu.
Fig. 4 zeigt ein Regelungsschema zur Erzeugung der Spannung von 3 bis 6 kV; darin bedeuten

1 Triac (elektronisches Lastrelais)
2 Optokoppler
3 Ausgabemodul
4 Lastteil mit Stufenschaltung
5 Eingabemodul (Wechselrichter)
6 Frequenzumformer
7 Einpulsmittelpunktschalter
9 Stufenschalter
10 Fototransistor
11 Fotobugristor

Kurzbeschreibung

1. Im Eingang wird von dem Eingabemodul (5) (einem Sinus-Wechselrichter 12 V-/220 V) ein Netztrafo 220/400 V eingespeist. Die Spannungsstufe 400 V ~ wird zur Ansteuerung des Optokopplers (2) und Triacs (1) genutzt. Die Spannungsstufe 220 V geht bis zur Einspeisung des Lastteil mit Stufenschaltung (4) 220 V/3 - 6 kV.

2. Der Triac (1) (Lastrelais) wird über einen Optokoppler (2) (Signalübertragungsglied) Parallel von einem Einpulsmittelpunktschalter (7) angesteuert. Der Einpulsmittelpunktschalter ist für den Dauerbetrieb zuständig. Über eine Taktfrequenz des Frequenzumformers (6) vom Fototransistor (10), Lichtsendereingang und Fotobugristor (11), Lichtempfängerausgang wird eine Rampenspannung geliefert. Wenn die Rampenspannung und die Steuerspannung gleich sind, ist eine Ansteuerung für den Triac gegeben. Der Impulstakt beträgt:

$$f_{max} \leq 30\ s^{-1}$$

$$I_{max} \leq 1\ A$$

Die Impulsdauer kann durch einen Stufenschalter (9) geändert werden. Der Triac steuert im Ausgang einen Transformator 220/3 - 6 kV an.
Figur 2 zeigt den beispielsweisen Bau des Ionisationselements. Hierin bedeuten:

1. elektrische Anschlüsse (200 - 240 Volt) Gleichspannung
2. Gehäuserahmen
3. Anodengeflecht
4. Kathodengeflecht
5. Einrichtung zur mechanischen Spannung des Anoden- und Kathodengeflechtes
6. Luftrichtung

Durch die geringe Distanz von Anodengeflecht und Kathodengeflecht erfolgt ein schneller Ladungsaustausch. Dadurch werden die vorbeiströmenden Sauerstoffmoleküle schnell geladen. Bestmöglicher Ladungstrenner ist bekanntlich Luft. Somit wird ein Optimum an Ladungsübergang zum Sauerstoffmolekül erreicht. Der Vorteil dieses loinisationselements liegt bei:

- optimaler Ladungsübergang zum Sauerstoffmolekül
- äußerst geringer Wartungsaufwand
- bestmögliche Energieausnutzung der Spannungsversorgung
- äußerst geringer Koronarenentladungs-Verschleiß
- großflächiger Ladungsübergang mit hoher Effizenz
- sehr lange Standdauer

Figur 5 zeigt den beispielsweisen Bau des Differenziators. Der obere Teil zeigt den Gehäuserahmen mit der Platte in der Draufsicht, der untere Teil einen Querschnitt. Hierin bedeuten:

1 Gehäuserahmen aus Aramidfaser-Epoxy
2 Kathodengeflecht aus Edelstahl mit einer Maschenweite von 0,6 bis 0,8 mm
3 Anodengeflecht aus Edelstahl mit einer Maschenweite von 0,5 bis 0,63 mm
4 Duran-Silikat-Glasplatte 1,2 bis 1,7 mm
5 Spannungspole zur Energieversorgung des Differenziators

Funktionsweise:

Die Luft fließt an dem Differenziator vorbei.
Durch gezielte Polung der An- und Kathode werden die Ladungsrichtung der Sauerstoffmoleküle in positive oder negative Luftionen gesteuert. Somit wird der Ladungszustand welcher primär vom Ionisationsmodul erzeugt wird, sensibilisiert in Richtung vorwiegend positiv oder negativ, je nach Notwendigkeit des Oxidationspotentials im Rohwasser. Dies garantiert ein Höchstmaß an Ausnutzung der Erzeugungsenergie und optimale Anpassung des Oxidationsprozesses.
Figur 3 zeigt als Beispiel einen Schnitt durch eine Reaktorsäule mit folgenden Bezugszeichen

1. Abluftstutzen/Fortluftauslaß
2. Reaktormantel PN 10
3. Fertigwasserauslaß
4. Verschraubung PN 10
5. Reaktor-Innenrohr
6. Durchlaßbohrungen
7. Fritte. Duran-Glas-Perlator
8. Reaktorzuluftstutzen
9. Dichtungssatz für Reaktorinnenrohr
10. Zulaufstutzen für Rohwasser

Mit Hilfe des erfindungsgemäßen Verfahrens werden Kohlenwasserstoffe und deren chemisch artverwandte Verbindungen schnell und wirkungsvoll oxidiert. Durch das hohe Oxidationspotential der geladenen Luftionen werden auch Bakterienhüllen gespalten und somit nachhaltig vernichtet. In Wasser gelöste Huminstoffe gehören zu den schwer abbaubaren Substanzen in der Trinkwasseraufbereitung. Auch hier werden gute Ergebnisse erzielt.
Im Gegensatz zum Verfahren unter Einsatz von Ozon benötigt das erfindungsgemäße Verfahren wesentlich geringere Energiemengen. Der Gesamtenergiebedarf liegt bei ca. 1,2 Watt/l mittelschwer belastetem Rohwasser.
Durch das entwickelte Verfahren wird eine hohe Oxidationsintensität erreicht. Bisher wurde Ozon als bestmöglicher Oxidator angesehen. Jedoch ist die Wirksamkeit des erfindungsgemäßen Verfahrens (durch Ionisation) entschieden höher. Dies ergibt sich aus folgender Tabelle der Abbaueffekte (in %):

| | mit Ozon | ohne Ionisation | mit Ionisation |
|---|---|---|---|
| Huminsäure (Janssen) | 0,2 | 0,6 | 8,2 |
| Huminsäure (Fluka) | 0,2 | 0,4 | 7,0 |
| Huminsäure (Aldrich) | 0,2 | 0,5 | 2,3 |
| Methylviolett | 1,5 | 6,3 | 37,9 |
| Kristallviolett | 1,0 | 3,5 | 69,3 |
| Methylenblau | 1,0 | 16,8 | 34,9 |
| Fuchsin | 1,4 | 15,4 | 52,3 |
| Phenol | keine Messung | 1,6 | 6,9 |
| Colorentwickler 2 | 1,0 | 4,9 | 28,3 |

(fortgesetzt)

| | mit Ozon | ohne Ionisation | mit Ionisation |
|---|---|---|---|
| Colorentwickler 3 | 0,4 | 5,6 | 35,0 |
| Colorentwickler 4 | 0,5 | 7,8 | 37,2 |
| SW-Entwickler HMP | 0,3 | 1,6 | 30,5 |

Erfindungsgemäß gelingt auch die Trinkwasseraufbereitung von Rohwasser, das von Herbiziden verseucht ist. Einer der Hauptvertreter dieser schwer abbaubaren Triazinherbizide ist das Atrazin. Das Abbauvermögen in der Natur beträgt faktisch Null. Nachfolgende Tabelle zeigt die guten Ergebnisse beim Abbau solcher Triazinherbizide:

| Zeit (h) | Simazin I/Luft: 1,771 $m^3$/h Mittelwert Simazin (mg/l) | Propazin II/Luft: 1,842 $m^3$/h Mittelwert Propazin (mg/l) | Atrazin II/Luft: 1,735 $m^3$/h Mittelwert Atrazin (mg/l) |
|---|---|---|---|
| 0 | 2,069 | 1,974 | 1,8845 |
| 1 | 1,6295 | 1,319 | 1,3965 |
| 2 | 1,1895 | 0,8521 | 0,983 |
| 3 | 0, 819 | 0,479 | 0, 5515 |
| 4 | 0,542 | 0,251 | 0,272 |
| 5 | 0,313 | 0,067 | 0,106 |
| 6 | 0,1555 | - | 0,046 |
| 7 | 0,1165 | - | 0,0355 |

Bei der Aufbereitung von Bad- und Poolwasser, die durch erhebliche Chlorzugabe zu weiteren Verunreinigungen wie Chlorphenolen führen, ist das Verfahren ebenfalls erfolgreich. Hier werden sehr geringe Abbauzeiten ermittelt, wie sich aus nachfolgender Tabelle ergibt (Konzentration in mg/l):

| Zeit (s) | 2.5-Dichlorphenol | 2,4,5-Trichlorphenol | 2,3,4,5-Tetrachlorphenol | Pentachlorphenol | 4-Chlor-2-methylphenol |
|---|---|---|---|---|---|
| 0 | 2.3295 | 2,214 | 2,108 | 2,226333333 | 2,545 |
| 15 | 1.9485 | 1,770666667 | 1,5485 | 1,575 | 2,1425 |
| 30 | 1.5535 | 0,761666667 | 0,329 | 0,299 | 1,401 |
| 45 | 0.5995 | 0,107333333 | 0,0355 | 0,038 | 0,545 |
| 60 | 0.206 | 0,016333333 | | | 0,152 |

## Patentansprüche

1. Vorrichtung zur Aufbereitung von mechanisch, organisch und/oder biologisch verunreinigtem Wasser, die mindestens einen über Füllpumpen mit dem zu behandelndem Wasser beschickten Reaktor sowie einen an den Reaktor angeschlossenen Ionisator mit vorgeschaltetem Kompressor zum Einbringen positiver und negativer Sauerstoffionen unter einem Druck von 1,2 bis 3,5 bar über Glasfritten in den Reaktor umfasst, **dadurch gekennzeichnet, dass** der Ionisator aus mindestens einem Ionisationselement besteht, das aus großflächigen Anoden- und Kathodengeflechten gebildet ist und elektrische Anschlüsse zum Anlegen einer Gleichspannung von 3 - 6 kV aufweist, sowie aus einem Differenziator besteht, bei dem in einem mit Spannungszuführungen versehenen Gehäuserahmen unter zwei Glasplatten ein Kathodengeflecht eingeschlossen ist, wobei sich auf den beiden Seiten der Glasplatten ein Anodengeflecht befindet, und bei dem Spannungspole zur gezielten Polung zur Steuerung der Ladungsrichtung der Luftionen vorgesehen sind, und dem Reaktor verschiedene Filter vor- und nachgeschaltet sind.

2. Vorrichtung nach Anspruch 1, **dadurch gekennzeichnet, dass** der Reaktor

   - einen äußeren Rohrmantel,
   - ein Reaktorinnenrohr mit Durchflussbohrungen und einer Glasfritte am unteren Ende,
   - seitlich angeordnete Wassereinlaufstutzen und Wasserauslaufstutzen, sowie
   - Verschraubungen und Dichtungen

umfasst .

3. Vorrichtung nach Anspruch 1, **dadurch gekennzeichnet, dass** die Glasfritte den inwändigen Reaktorboden unten abschließt und aus Duran®-Glas besteht.

4. Verfahren zur Aufbereitung von mechanisch, organisch und/oder biologisch verunreinigtem Wasser mit einer Vorrichtung nach Anspruch 1, durch intensive Behandlung mit in einem Ionisator bei einer Nennspannung von 3 bis 6 kV in positive und negative Sauerstoffionen ionisierter und unter einem Druck von 1,2 bis 3,5 bar über Glasfritten in feinen Blasen in das in einem Reaktor befindliche Wasser eingebrachter Luft als Oxidationsmittel, **dadurch gekennzeichnet, dass** die Ionisierung der Luft in einer langsamen Luftströmung bei einer Verweildauer von 0,5 bis 6 Sekunden zwischen in geringem Abstand angeordneten großflächigen Anodengeflechten und Kathodengeflechten eines aus einem oder mehreren hintereinander liegenden luftdurchströmten Ionisationselementen und diesem zugeordnetem Differenziator gebildeten Ionisators erfolgt und in dem Differenziator durch gezielte Polung seiner Anoden- und Kathodengeflechte ein zielgerichteter Ladungszustand der positiven und negativen Luftionen entsprechend der Wasserqualität erzeugt wird, wobei das Wasser vor und nach der Behandlung gefiltert wird.

5. Verfahren nach Anspruch 4, **dadurch gekennzeichnet, dass** die Nennspannung aus einer 12 V-Niederspannung über 220 V und dann über eine elektronische Regelung erzeugt wird.

6. Verfahren nach Anspruch 4, **dadurch gekennzeichnet, dass** die Ionisierung der Luft im Ionisator bei einem Druck von ca. 2,5 bar erfolgt.

7. Verfahren nach Anspruch 4, **dadurch gekennzeichnet, dass** die Verweildauer der Luft im Ionisator 1 bis 3 s beträt.

8. Verfahren nach Anspruch 4, **dadurch gekennzeichnet, dass** die Luft im Ionisator teilweise ionisiert wird, wobei ein Ionisationsgrad von 90 - 96 Vol.-% erreicht wird.

9. Verfahren nach einem der Ansprüche 4 bis 8, **dadurch gekennzeichnet, dass** die Zuführung der ionisierten Luft in das zu behandelnde Wasser durch die Glasfritten bei einem Druck von 2,0 bis 2,5 bar erfolgt, wobei das Verhältnis der Porenöffnungen der Glasfritten zum Druck so gewählt ist, dass die in das zu behandelnde Wasser eingebrachten Luftbläschen eine Durchmesser von 0,1 bis 2,0 mm haben.

## Claims

1. An apparatus for the treatment of mechanically, organically, and/or biologically contaminated water that at least includes a reactor into which the water to be treated is fed via filling pumps as well as an ionizer connected to said reactor with an upstream compressor for introducing positive and negative oxygen ions under a pressure of 1.2 to 3.5 bar via fritted-glass filters into the reactor, **characterized in that** said ionizer consists of at least one ionization element formed by large anode and cathode meshes and comprising electric ports for applying a direct voltage of 3 to 6 kV, and of a differentiator with a cathode mesh enclosed under two glass plates in a frame equipped with voltage feeders, an anode mesh being located on each side of the glass plates, and air ions provided for controlled polarity to control the direction of charge of said air ions, and various filters upstream and downstream of said reactor.

2. The apparatus according to claim 1, **characterized in that** said reactor includes:

   - an outer tubular jacket,
   - a inner reactor pipe with flow holes and a fritted-glass filter at its bottom end,
   - water inlet and water outlet ports arranged on the side, and
   - screwed connections and packings.

3. The apparatus according to claim 1, **characterized in that** the fritted-glass filter closes the reactor bottom and consists of Duran® glass.

4. A method for the treatment of mechanically, organically, and/or biologically contaminated water using an apparatus according to claim 1 through intensive treatment in an ionizer at a nominal voltage of 3 to 6 kV where air ionized into positive and negative oxygen atoms and under a pressure of 1.2 to 3.5 bar is inserted via fritted-glass filters in fine bubbles as an oxidant into the water in the reactor, **characterized in that** said air is ionized in at a slow air flow

with a dwell time of 0.5 to 6 seconds between large-area anode and cathode meshes arranged at a short distance within one or several ionization elements arranged one after the other through which said air flows, and an associated differentiator, and **in that** a controlled charge state of the positive and negative air ions depending on water quality is achieved in said differentiator by controlled polarity of said anode and cathode meshes, said water being filtered before and after the treatment.

**5.** The method according to claim 4, **characterized in that** said nominal voltage is generated from a 12 V low voltage via 220 V and via a downstream electronic control unit.

**6.** The method according to claim 4, **characterized in that** the air is ionized in the ionizer at a pressure of about 2.5 bar.

**7.** The method according to claim 4, **characterized in that** the dwell time of the air in the ionizer is between 1 and 3 seconds.

**8.** The method according to claim 4, **characterized in that** the air in the ionizer is partially ionized, reaching a degree of ionization of 90 - 96 percent by volume.

**9.** The method according to any one of claims 4 to 8, **characterized in that** the ionized air is fed into the water to be treated through fritted-glass filters at a pressure of 2.0 to 2.5 bar, the ratio of pore openings in the fritted-glass filter to the pressure being chosen so that the air bubbles introduced into the water to be treated are 0.1 to 2.0 mm in diameter.

## Revendications

**1.** Dispositif de traitement d'eau polluée par voie mécanique, organique et/ou biologique, qui comprend au moins un réacteur chargé en eau à traiter par le biais de pompes de remplissage ainsi qu'un ioniseur raccordé au réacteur avec compresseur placé en amont permettant d'apporter des ions oxygènes positifs et négatifs à une pression de 1,2 à 3,5 bars via des frittes de verre dans le réacteur, **caractérisé en ce que** l'ioniseur se compose d'au moins un élément d'ionisation, qui est formé à partir de treillis d'anode et de cathode à grande surface et présente des raccords électriques permettant d'appliquer une tension continue de 3 - 6 kV et est constitué d'un différenciateur, au niveau duquel un treillis de cathode est contenu sous deux plaques de verre dans un cadre de boîtier muni d'alimentations en tension, dans lequel se trouve un treillis d'anode des deux côtés des plaques de verre, et sur lequel des pôles de tension sont prévus pour la polarisation ciblée permettant la commande du sens de charge des ions de l'air et différents filtres sont placés en amont et en aval du réacteur.

**2.** Dispositif selon la revendication 1, **caractérisé en ce que** le réacteur comporte

- une enveloppe tubulaire externe,
- un tube interne de réacteur présentant des perçages d'écoulement et une frite de verre au niveau de l'extrémité inférieure,
- des tubulures d'arrivée d'eau et des tubulures d'évacuation d'eau disposées de manière latérale, ainsi que
- des raccords vissés et des joints.

**3.** Dispositif selon la revendication 1, **caractérisé en ce que** la fritte de verre ferme en bas le fond du réacteur côté interne et est en verre Duran®.

**4.** Procédé de traitement d'eau polluée par voie mécanique, organique et/ou biologique à l'aide d'un dispositif selon la revendication 1, par traitement intensif avec de l'air ionisé dans un ioniseur à une tension nominale de 3 à 6 kV en ions oxygène positifs et négatifs et introduit en tant qu'agent oxydant à une pression de 1,2 à 3,5 bars sous forme de fines bulles dans l'eau se trouvant dans le réacteur par le biais de frittes de verre, **caractérisé en ce que** l'ionisation de l'air se déroule dans un écoulement d'air lent pour une durée de séjour de 0,5 à 6 secondes entre des treillis d'anode et des treillis de cathode à grande surface disposés à faible distance d'un ioniseur formé d'un ou de plusieurs éléments d'ionisation traversés par l'air situés l'un derrière l'autre et du différenciateur associé et **en ce qu'**un état de charge ciblé des ions de l'air positifs et négatifs correspondant à la qualité de l'eau est obtenu dans le différenciateur par une polarisation ciblée de ses treillis d'anode et de cathode, dans lequel l'air est filtré avant et après le traitement.

5. Procédé selon la revendication 4, **caractérisé en ce que** la tension nominale est générée à partir d'une basse tension de 12V par le biais du 220V puis via un réglage électronique.

6. Procédé selon la revendication 4, **caractérisé en ce que** l'ionisation de l'air dans l'ioniseur s'effectue à une pression d'environ 2,5 bars.

7. Procédé selon la revendication 4, **caractérisé en ce que** la durée de séjour de l'air dans l'ioniseur est de 1 à 3 s.

8. Procédé selon la revendication 4, **caractérisé en ce que** l'air dans l'ioniseur est partiellement ionisé, un degré d'ionisation de 90-96 % vol. étant atteint.

9. Procédé selon l'une quelconque des revendications 4 à 8, **caractérisé en ce que** l'air ionisé est amené dans l'eau à traiter par les frittes de verre à une pression de 2,0 à 2,5 bars, dans lequel le rapport des ouvertures de pores des frittes de verre par rapport à la pression est choisi de telle sorte que les petites bulles d'air introduites dans l'eau à traiter présentent un diamètre de 0,1 à 2,0 mm.

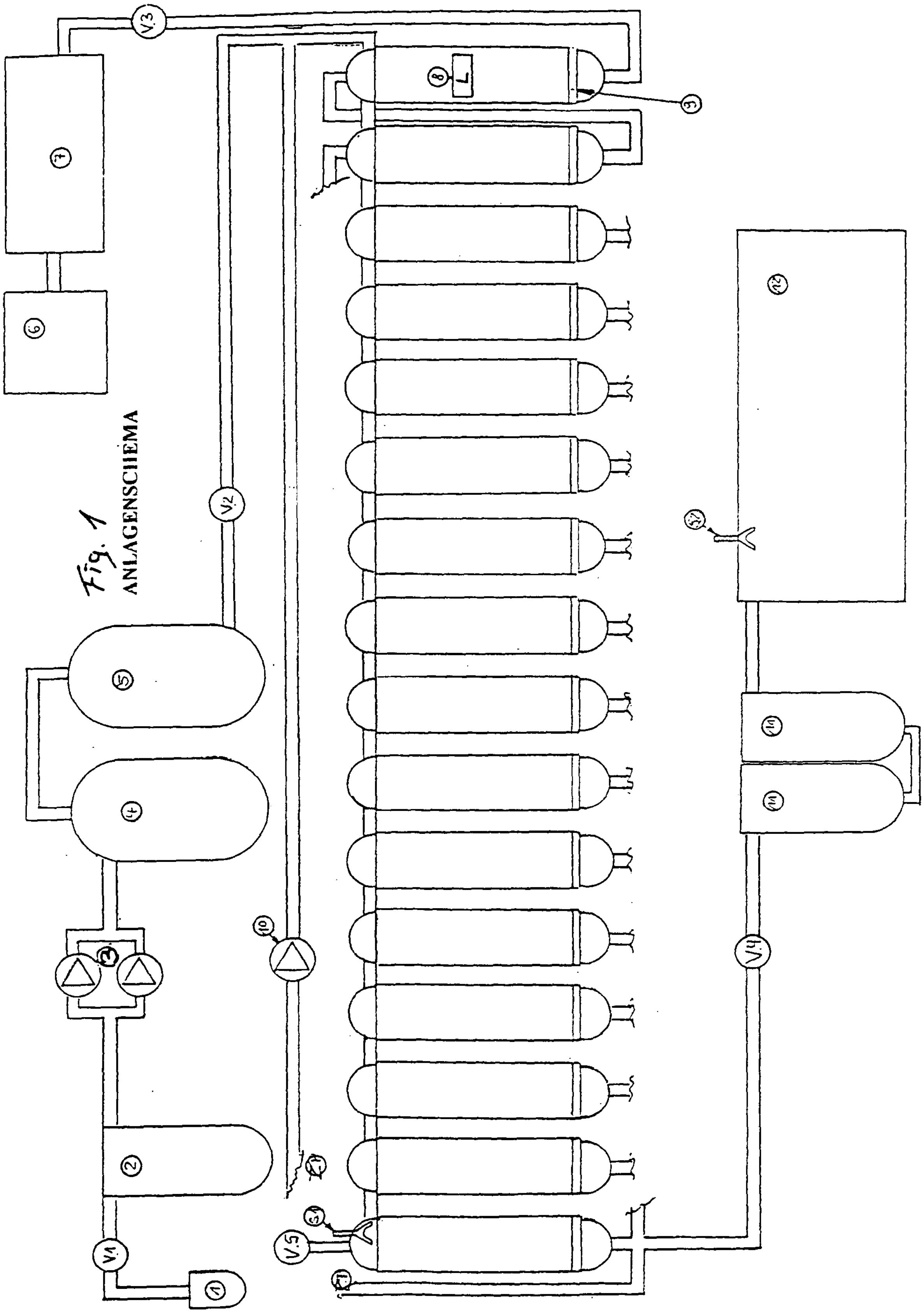


Fig. 1
ANLAGENSCHEMA

IONISATIONSELEMENT

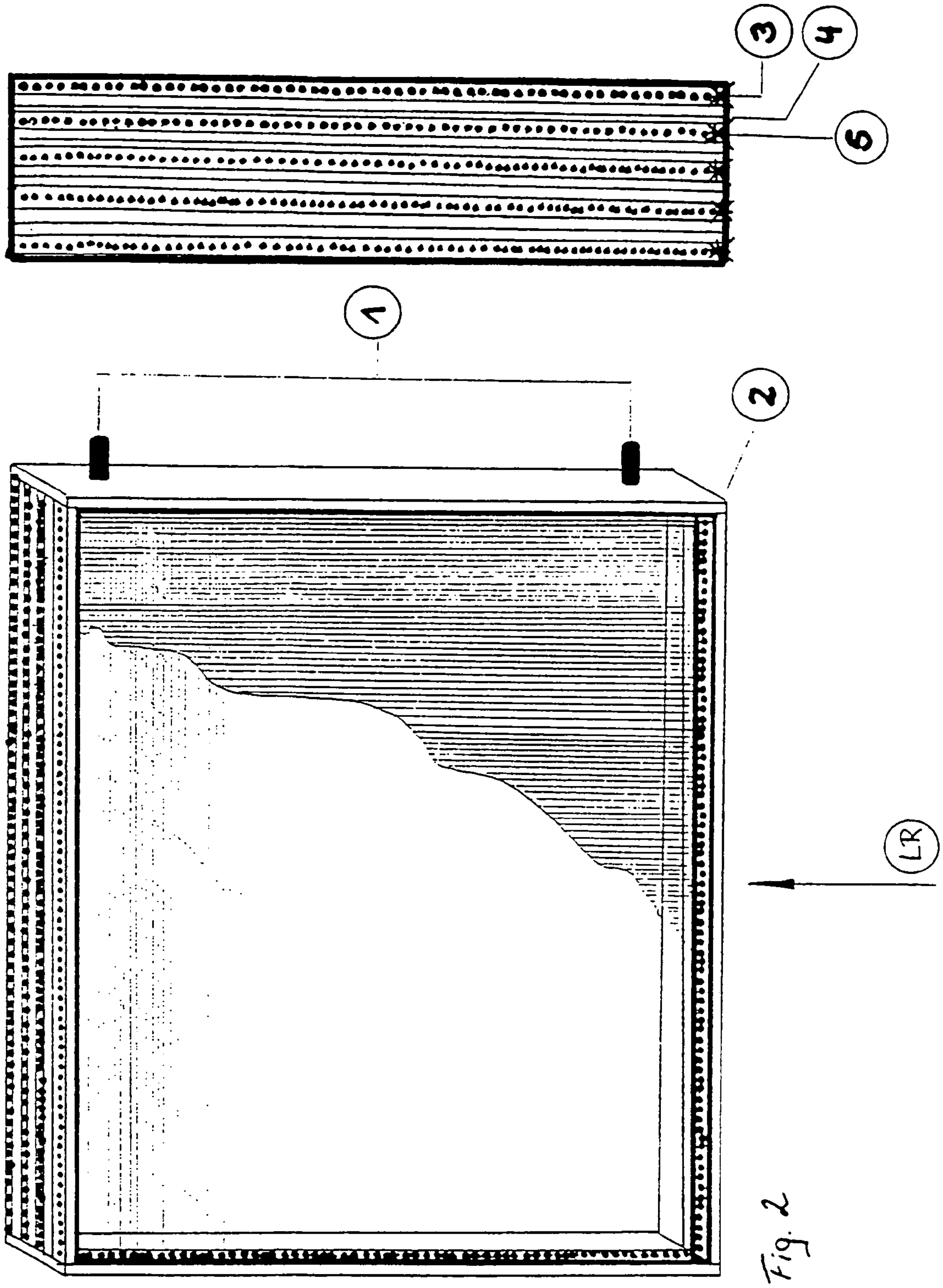


Fig. 2

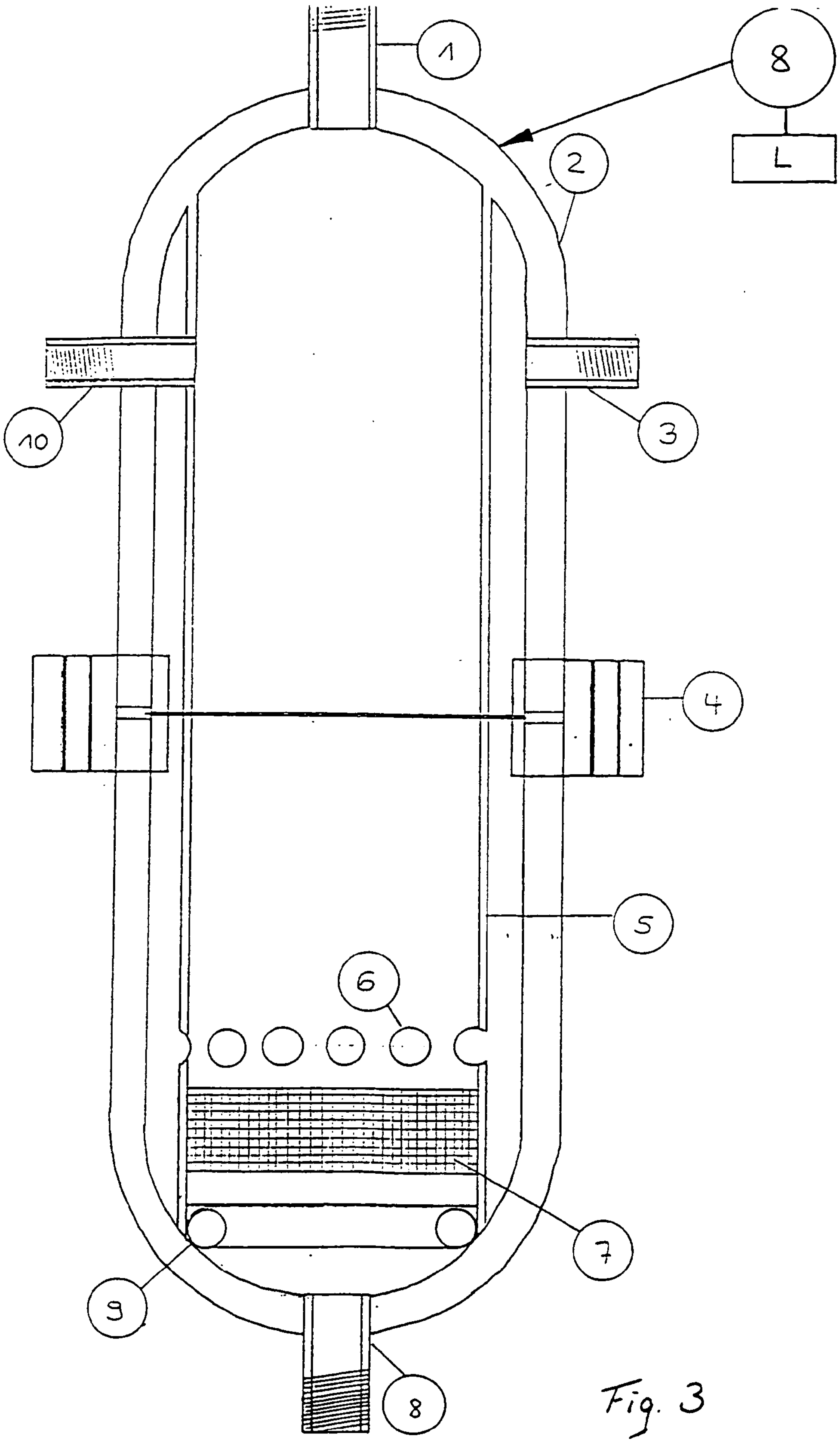


Fig. 3
Reaktor

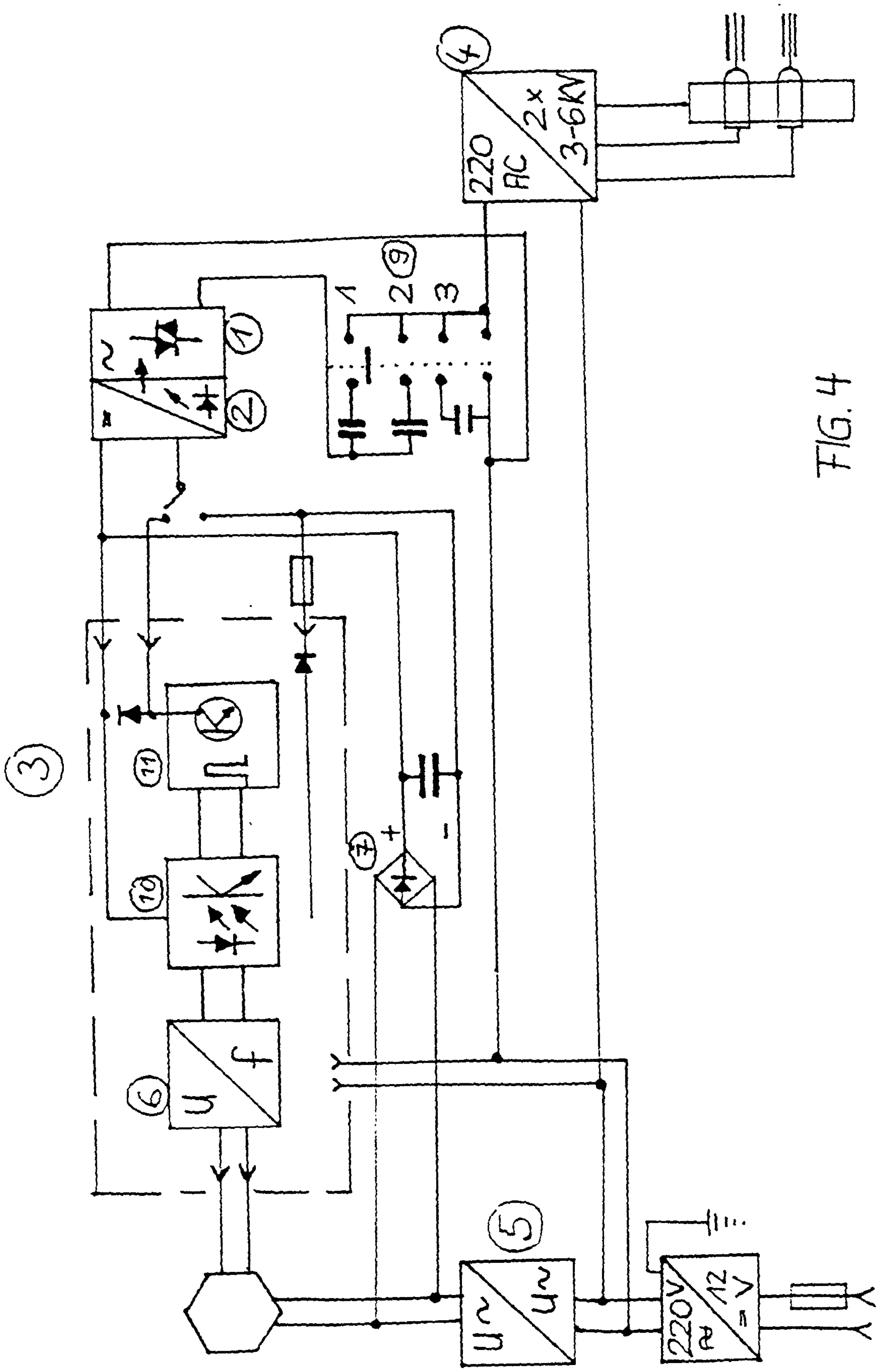


FIG. 4
Regelungsschema

Differenziator

FIG. 5

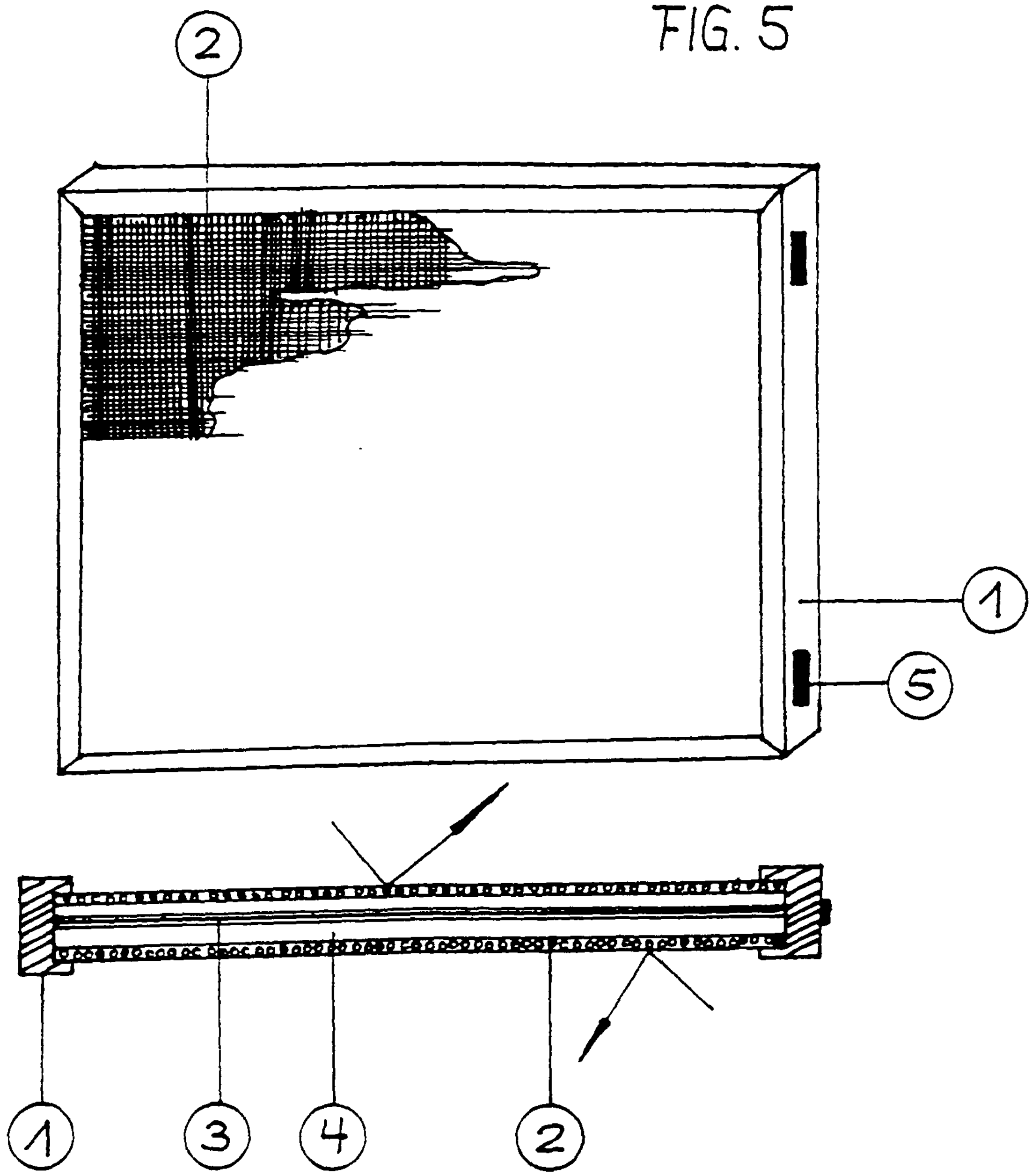

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5527459 A